(19) Europäisches Patentamt
European Patent Office
Office européen des brevets

(11) **EP 4 641 418 A1**

(12) **EUROPEAN PATENT APPLICATION**

(43) Date of publication:
**29.10.2025 Bulletin 2025/44**

(21) Application number: 24172825.2

(22) Date of filing: **26.04.2024**

(51) International Patent Classification (IPC):
*G06F 21/57* (2013.01)      *H04L 9/40* (2022.01)

(52) Cooperative Patent Classification (CPC):
**H04L 63/1441; G06F 21/577**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Primary Target GmbH**
**85737 Ismaning (DE)**

(72) Inventor: **Angress, Oscar**
**97072 Würzburg (DE)**

(74) Representative: **Banse & Steglich**
**Patentanwälte PartmbB**
**Patentanwaltskanzlei**
**Herzog-Heinrich-Straße 23**
**80336 München (DE)**

(54) **METHOD AND PLATFORM FOR DETERMINING COUNTERMEASURES AGAINST SECURITY ISSUES IN A DATA SYSTEM**

(57)    The present invention relates to a computer-implemented method for selecting countermeasures for potential threats to assets of a data system (2), comprising the steps of:
- Providing (S1) a configuration of the data system including their assets including devices (21, 22, 23, 24, 25, 26, 27, 28, 29), software, data, data transmissions and their interconnections;
- For each asset, retrieving (S2) from a database (14) a set of relevant OSI layers on which known security vectors may exist,
- For each retrieved OSI layer of each asset, retrieving (S3), from the database (14), potential threats each associated to one or more security attributes each defining a goal of cybersecurity, wherein the potential threats are associated to one or more threat feasibility attributes each indicating a level of an aspect of feasibility which make up for a security risk imposed by the respective potential threat;
- Using the database, associating (S4) to each of the potential threats at least one countermeasure of a set of countermeasures, each countermeasure has at least one countermeasure feasibility attribute each indicating a level of an aspect of feasibility reached when the countermeasure is applied on the potential threat, wherein the countermeasure is suitable for reducing the security risk of the respective potential threat in one or more aspects of threat feasibility attributes;
- Automatically performing (S5) an optimization to select one or more countermeasures among the set of countermeasures, so that the selected countermeasures are sufficient to reduce an overall security risk below a given level of security risk.

Fig. 1

EP 4 641 418 A1

## Description

Technical field

The present invention relates generally to the field of cybersecurity and security risk assessment systems, and particularly to a method and a platform for reducing risks implied by threats and vulnerabilities of an operational technology infrastructure.

Technical background

Cybersecurity addresses all deliberate attacks on the data system with the goal to steal/manipulate or tamper critical data or to cause substantial damage which poses many problems to the infrastructure owner. There is an inherent wish of each infrastructure owner to reduce cybersecurity risks as far as possible, realistically considering time and costs for any countermeasures.

Nowadays, infrastructure data systems ranging from simple components, arrangements of components, grids or networks of components are increasingly complex. Those components may include hardware and/or software with respect to at least one of data processing, data transmission, data handling and the like. These assets of those data systems usually are exposed to threats and have known vulnerabilities regarding cybersecurity issues.

A typical enterprise security infrastructure comprises different tools aiming at multiple OSI layers, such as transport, data, application network and the like. These tools allow a general level of protection leaving open unhandled known threats and vulnerabilities and further potentially introduce additional threats and vulnerabilities by the tools themselves.

Furthermore, there are no general directions for a security manager which security issue has to be addressed next keeping in mind limited time, skill, manpower and budgetary resources. While vulnerabilities of assets in the data system usually can be handled by software or hardware patches, threats are more difficult to cope with as the kind of attack is not always predictable.

In the prior art, risk assessment has been widely addressed such as in WO 2012/109633 A2 which discloses a security countermeasures management platform that allows security and compliance users to view risks and vulnerabilities in their environment with the added context of what other mitigating security countermeasures are associated with that vulnerability and that are applicable and/or available within the overall security architecture. Additionally, the platform allows users to take one or more actions from controlling the operation of a security countermeasure for mitigation purposes to simply documenting the awareness of a security countermeasure that is in place.

Furthermore, document US 2014/0137257 A1 discloses a method for assessing a risk of one or more assets within an operational technology infrastructure comprising the steps of providing a database containing data relating to the one or more assets, calculating a threat score for the one or more assets using one or more processors communicably coupled to the database, calculating a vulnerability score for the one or more assets using the one or more processors, calculating an impact score for the one or more assets using the one or more processors; and determining the risk of the one or more assets based on the threat score, the vulnerability score and the impact score using the one or more processors.

Summary of the invention

The present invention relates to a method for determining countermeasures against potential threats to a data system according to claim 1 and a corresponding security countermeasure determination platform according to the further independent claim.

Preferred embodiments are indicated in the subclaims.

According to a first aspect, a computer-implemented method for selecting countermeasures for potential threats to assets of a data system is provided, comprising the steps of:

- Providing a configuration of the data system, including their assets, comprising devices, software, data, data transmission, and their interconnections;
- For each asset, retrieving from a database a set of relevant OSI layers on which known security vectors may exist,
- For each retrieved OSI layer of each asset, retrieving, from the database, potential threats each associated to one or more security attributes each defining a goal of cybersecurity, wherein the potential threats are associated to one or more threat feasibility attributes each indicating a level of an aspect of feasibility which make up for a security risk imposed by the respective potential threat;
- Using the database, associating to each of the potential threats at least one countermeasure of a set of countermeasures, each countermeasure has at least one countermeasure feasibility attribute each indicating a level of an aspect of feasibility reached when the countermeasure is applied on the potential threat, wherein the countermeasure is suitable for reducing the security risk of the respective potential threat in one or more aspects of threat feasibility attributes;

- Automatically performing an optimization to select one or more countermeasures among the set of countermeasures, so that the selected countermeasures are sufficient to reduce an overall security risk below a given level of security risk.

Data systems in any operational technology infrastructure consist of a variety of assets. An asset in a data system refers to anything of value that helps the data system to meet its tasks and objectives. The assets may include hardware components or devices, such as servers, storage processors and the like, software components, such as databases, applications and the like, data, such as customer information, financial records etc., data transmissions between assets, and a network which is the interconnection between hardware and software components. Assets are vulnerable to threats which are potential sources of harm or damage, such as cyber-attacks, natural disasters or human error.

Threats in a data system refer to potential security issues or dangers that could compromise the security, integrity and availability of the data system, such as unauthorized access, tampering, spoofing, and natural disasters. In contrast thereto, vulnerabilities, on the other hand, refer to weaknesses in the system's design, implementation, or configuration that can be exploited by threats to gain access to sensitive information or disrupt the normal system operation. Examples of vulnerabilities include unpatched software, weak passwords, and open network ports. Addressing both threats and vulnerabilities is critical for ensuring the security and reliability of a data system.

The goal of cybersecurity is to protect information and systems from cyberthreats. The countermeasures are means to achieve the goal.

A data system is made up by assets. Each asset is associated with one or more layers of the OSI (Open Systems Interconnection) model or a similar model. The layers define abstract levels in which the respective asset interacts.

The OSI model layers are as follows:

1. A physical layer responsible for the physical transmission of data and associated with assets, such as network cables, switches and routers,
2. a data link layer responsible for the reliable transmission of data frames and associated with assets, such as network adapters and bridges,
3. a network layer responsible for routing data and associated with assets, such as routers and gateways,
4. a transport layer responsible for the reliable delivery of data and associated with assets, such as transport protocols, e.g. TCP, UDP, and transport services,
5. a communication layer responsible for establishing maintaining and terminating communication sessions and associated with assets such as session protocols and session management services,
6. a presentation layer, responsible for formatting and encryption of data and associated with assets, such as data compression and encryption algorithms, and
7. an application layer, responsible for the user level services and associated with assets, such as application protocols, e.g., http, FTP etc. and software applications.

Each of these assets on OSI layers may be vulnerable to threats that potentially affect one or more cybersecurity attributes, including known aspects such as integrity, confidentiality, authenticity, and availability of the data system. These cybersecurity attributes define a cybersecurity objective and should be ensured for each relevant OSI layer of each asset of the data system to be secured.

Integrity refers to the accuracy and consistency of data over its lifetime, i.e., ensuring that the data is not altered or tampered with in any unauthorized way. Confidentiality refers to the protection of sensitive information from unauthorized disclosure, and availability refers to the accessibility of data on demand.

A threat database is provided that is configured to map assets of any type of infrastructure to the OSI layers involved, and each OSI layer of the asset to one or more potential threats. Each threat is relevant to at least one of the aspects of the cybersecurity attributes.

Given a specific configuration of the data system to be secured defined by its assets and their interconnections, for each asset a set of relevant OSI layers can be retrieved from the database, wherein further for each identified OSI layer of the assets one or more potential threats are retrieved from the database. Each threat concerns one or more cybersecurity attributes (integrity, confidentiality, authenticity and availability) in a specific manner.

Furthermore, the database has information about the severity of the threats with respect to its feasibility, i.e. indicating the difficulty in making use of the potential threat. The feasibility is indicated by threat feasibility attributes.

The threat feasibility attribute refers to the likelihood that the threat could actually be successfully carried out and cause harm to the associated asset of the data system or compromise any of the cyber security attributes related to the respective asset. The feasibility attribute takes into account aspects of feasibility such as the attacker's skills, availability of tool and resources, the protection already in place to mitigate the threat, and motivations as well as the security measures in place to defend against the threat.

Further, the threat feasibility attribute/property may be categorized in aspects such as attack vector, complexity, privileges, user interaction, reproducibility, equipment, likelihood and the like. "Expertise" means the technical knowledge needed to use the threat for an attack, "attack vector" means the complexity of the attack successfully making use of the threat, "complexity" indicates the complexity of the threat, "privileges" are privileges needed to execute measures posing a threat, "user interaction" indicates how much interaction is needed to execute measures that pose a threat, "reproducibility" indicates the difficulty to reproduce the measures of a once detected threat/vulnerability, "equipment" indicates a level of complexity of the equipment needed to perform the attack, and "likelihood" indicates the probability that an attack or a threat is successful. Each aspect of the threat feasibility attributes may be evaluated with a level, such as low, medium, high or the like, or a value such as between 0 and 1, where 0 means no and 1 high relevance.

The threat feasibility attributes can be used for risk management to determine the level of risk that threats pose to their associated assets. Threats with a higher level of an aspect of a threat feasibility attribute are considered higher risk and may be prioritized for mitigation and response planning. Threats with a lower level of an aspect of a threat feasibility attribute may be given a lower priority because the likelihood of the threat being exploited is low.

The threat feasibility attributes are dynamic attributes that may also depend on, or be countered by, countermeasures already in place in the data system. The overall security risk of a data system depends on the levels of each potential threat and its feasibility attributes identified for each relevant OSI layer of each asset belonging to the data system. Thus, the overall security risk of the data system, e.g., in the form of an overall security metric, can be assessed by combining the levels of each threat feasibility attribute of each existing threat and, in particular, the level of each cybersecurity attribute affected by that threat.

"Countermeasure" refers to a security solution designed to address a specific threat posed by an asset of the data system. Typically, a countermeasure is deployed on one or more OSI layer related to a specific asset so that countermeasures may include implementing a firewall, protecting data connections, installing monitoring software and the like. A countermeasure is seen as an asset which may also be found on the OSI layer for a (HSM) Hardware Security Module is such an example and may also add new attack vectors of potential threats of the system. Countermeasures may include, but are not limited to, network-based IDS/IPS, host-based IDS/IPS, secure email gateways, secure Web gateways, integrated security appliances, Web application firewalls, network access control, endpoint protection platforms, virtual private network solutions, switches, routers, application control solutions, data loss prevention (DLP) solutions, managed file transfer solutions, file integrity monitoring, email encryption, database encryption, and application hardening and shielding.

Countermeasures that can be used to mitigate or eliminate the threats therefore potentially reduce the overall security risk (indicated by the overall security metric) implied in the data system. Each countermeasure directed to a potential threat may have an effect on at least one of the threat feasibility attributes associated with the respective threat. Furthermore, each applied countermeasure may have an effect on one or more aspects of the threat feasibility attribute, as the countermeasure makes it impossible that the threat is carried out or increases the efforts needed regarding the one or more above-mentioned aspects of the threat feasibility attributes.

Therefore, the countermeasures associated with the threats are associated with a corresponding countermeasure feasibility attribute that indicates a level or value of each aspect of feasibility that will be achieved if the corresponding countermeasure is applied. Thus, the database can be used to evaluate each countermeasure in terms of its effectiveness in mitigating or eliminating the corresponding potential threat.

In other words, each countermeasure applied may have a countermeasure feasibility attribute that, when applied, affects the one or more threat feasibility attributes of the threat for which the countermeasure is selected. The countermeasure feasibility attribute may therefore reduce the likelihood of a successful attack, e.g., by requiring greater expertise on the part of an attacker and/or by requiring greater complexity of the attack vector, which may result in a longer time to execute the attack and potentially prevent the attacker from exploiting the potential threat.

The overall security risk may be evaluated by means of an overall security metric which is calculated based on the threat feasibility attributes of all potential threats and the countermeasure feasibility attribute of all considered countermeasures, wherein the optimization is performed based on a minimization of a cost function which depends on the overall security metric. The overall security metric may be calculated by weighting the levels of feasibility.

According to the above method, risk management is performed with the aim of determining the most effective countermeasures or an effective order/sequence of countermeasures to be applied in order to reduce the security risks of the data system to be secured. It has been found that applying countermeasures that have the greatest impact (mitigating or eliminating the risk posed by the threats) on the threat feasibility attributes of the identified threats (affected by the respective countermeasures) to a data system does not necessarily lead to the best possible result in terms of risk reduction.

Furthermore, the cost function of the optimization may depend on resources required to implement the respective considered one or more countermeasures, particularly one of time, material, budget, manpower, skill, processing capacity, and storage capacity.

It has also to be taken into account the additional potential threats which are added by the implementation/applying of one or more of the identified countermeasures which in the worst case may also lead to an increased overall security risk (overall security metric). Therefore, the process of determining the most effective countermeasures is not trivial and it has been found that an optimization may result in an optimized selection of a set of countermeasures which can be applied with specific limited resources such as time, costs, manpower, skills and the like or results in an order of countermeasures to be applied to have the best possible increase in overall security metric or a list with countermeasures in the order of a security gain when being applied.

According to the above method, an optimization may be performed by evaluating the effects of each countermeasure in terms of reduction of overall security risk.

It may be provided that the selected countermeasures are determined successively by iteratively carrying out optimization steps each after assuming application of the previously selected countermeasures.

Particularly, the assuming of the application of the previously selected countermeasures includes adding one or more further assets caused by the assumed application of the countermeasure wherein at least one new threat and at least one new countermeasure is associated with the one or more further assets, where the next iteration of the optimization considers the at least one new threat and at least one new countermeasure.

Particularly, when assuming the application of the previously selected countermeasures, another asset caused by the assumed application of the countermeasure may be considered, to which at least one assumed threat is associated, where the next iteration of the optimization considers the at least one assumed threat.

Thus, the increase in security risk due to the application of the countermeasure may also be considered. Therefore, when optimizing the selection or the order of countermeasures, countermeasures against threats which also represent additional assets do introduce threats of their own. Therefore, the optimization may be performed in one or more iterations when new threats are introduced by assumed application of countermeasures. As a result of the optimization, available resources can be further considered to limit the number or the extent or scope of countermeasures to be applied.

The optimization method can use a logical algorithm that tries to find the most effective countermeasure(s).

The advantage of optimization is basically to find one or more countermeasures that can reduce the overall security risk or at least one potential risk. Thus, it is preferable to find countermeasures that reduce multiple risks at once, even on more than one OSI layer.

The optimization may be performed using a cost function depending on the resources available to implement each countermeasure.

The selected countermeasures may be determined successively by iteratively performing optimization steps by assuming application of the previously selected countermeasures in each iteration.

It may be provided that the identified countermeasures are applied by a countermeasure mechanism to address the security vulnerabilities by performing the one or more identified countermeasures. The countermeasure mechanism may be one of the following: a network-based IDS/IPS, a host-based IDS/IPS, a secure email gateway, a secure web gateway, an integrated security appliance, a web application firewall, a network access control, an endpoint protection platform, a virtual private network, a switch, a router, an application control device, a data loss prevention (DLP) device, a managed file transfer device, a file integrity monitor, an email encryption device, a database encryption device, and an application hardening and shielding device.

The countermeasure mechanism may provide a countermeasure deployment strategy to provide the determined countermeasures in the predetermined order.

Brief description of the drawings

Embodiments are described in more detail in conjunction with the accompanying drawings in which:

Fig. 1     schematically shows a computer system representing a platform for risk management;

Fig. 2     schematically shows an exemplary data system to be secured;

Fig. 3     shows a flowchart for illustrating the method for determining security countermeasures in a given data system; and

Fig. 4     shows a schematic illustration of a database for retrieving countermeasures.

Detailed description

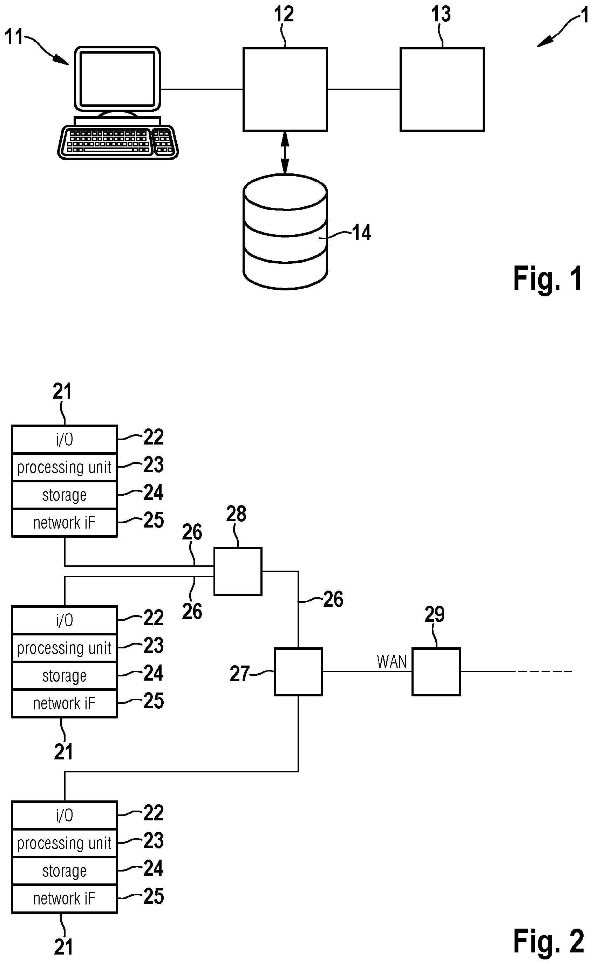

Fig. 1 schematically shows a platform 1 for determining countermeasures to decrease the security risk of a data system. The platform 1 may be executed on a conventional computing environment which may comprise a number of units such as a user interface 11 e.g. comprising a keyboard, mouse, display and the like, for enabling a user to interact with one or more aspects of the platform, a processing unit 12 for performing the method for selecting appropriate countermeasures to decrease the overall security risk of a given data system and a storage 13 for storing program code for the algorithm to select countermeasures, configuration data, user data and the like.

Basically, the platform of Fig. 1 is used to analyze the overall security risk of a given configuration of a data system and to select appropriate countermeasures to be applied with an optimized efficiency. The platform 1 may contain a database or may be in data communication with a remote database 14 (cloud). A countermeasure mechanism may be applied in the processing unit 12.

For example, a data system to be secured is shown in Fig. 2. The data system 2 of Fig. 2 comprises a number of terminals 21 each having an input-output means 22, such as a keyboard and a display, a processing unit 23, a memory 24 and network interfaces 25. The terminals 21 are interconnected with each other by means of wired network connections 26 for communication via TCP using a router 27 and switches 28 wherein the router is connected with a Wide Area Network (WAN) via a hardware firewall 29. Each of the terminals 21 may execute one or more software instances. The data system 2 described herein by way of example may be a standard corporate network for small or medium-sized enterprises.

Such a client-server data system 2 as shown in Fig. 2 is open to various security threats which may affect the operability and the confidentiality, integrity and availability of the data system.

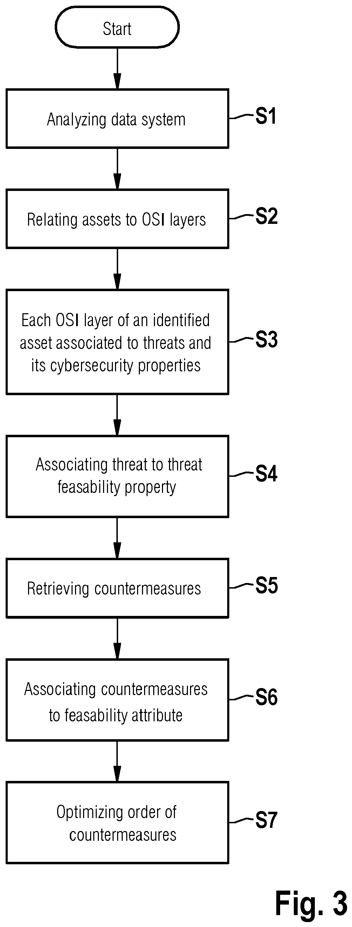

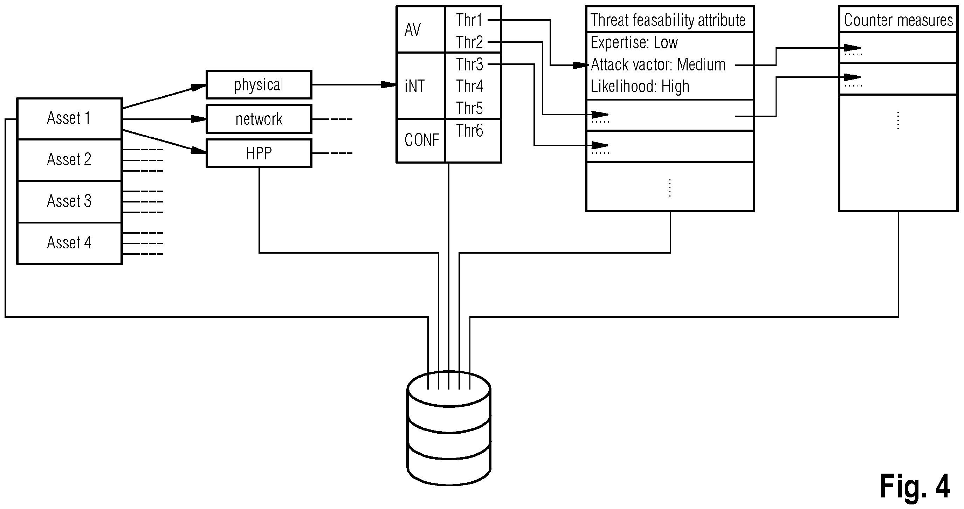

In conjunction with the flowchart of Fig. 3, a method for analyzing the data and for determining appropriate security countermeasures is described. In addition, Fig. 4 illustrates the interaction with information from the database.

In step S1, the data system 2 is analyzed with respect to its assets. The assets are identified by analyzing the used components 21-29, the implemented protocols, the software installed, and the like. It is obtained a list of assets (asset1, asset2, ...) of the data system. Each asset may have one or more layers such as hardware, software, data, signal and the like. Each of the assets has its own requirements in terms of security aspects given by cybersecurity attributes including aspects such as integrity, confidentiality, authenticity and availability of the data system. For instance, the list of assets may include:

In step S2 by querying the database 14, the assets are related to their respective OSI layers (physical, data link, network, transport, communication, presentation, and application) so that a list of specific assets belonging to the data system is obtained.

OSI Layer describes the separation of content, but in fact each asset may lean on multiple layers.

| Asset | OSI layer(s) |
|---|---|
| DATA | Virtual |
| FTP | Layer 7 - Application Layer |
| TCP | Layer 4 - Transport Layer |
| IP | Layer 3 - Network Layer |
| IEEE 802.3 | Layer 2 - Data Link Layer |
| IEE 802.3x Gigabit Ethernet Cable | Layer 1 - Physical Layer |
| Keyboard | Layer 1 - Physical Layer |
| Software | Layer 7 - Application Layer |
| Network interface | Layer 1 - Physical Layer |
| Network interface | Layer 2 - Data Link Layer |

The table shows the association of some of the assets of the data system 2 with respect to the involved OSI layer as a result of step S2.

The association to an OSI layer is important as hereby threats can be matched with assets over the security properties assigned to the OSI layer. Therefore, the assets determine the security properties in terms of needed protection.

In general, assets each have its individual requirements regarding security, i.e. confidentiality, integrity, authenticity and availability. Threats are mapped with the assets by means of these properties. All, assets, threats and countermeasures, are related to one or more OSI layers. Therefore, the link between assets and threats is given by the OSI layer and the cyber security properties. As an example: FTP is a protocol and belongs to the application layer of the OSI model. FTP is also a protocol based on TCP/IP, which is a part of the Ethernet Protocol. If FTP is part of an asset the OSI layers, Application layer (7), Transport Layer (4), Network layer (3), Data Link (2), and Physical Layer (1) are involved. To each of the layers, threats are associated as the attack vector violating one or all of its security properties (Confidentiality, availability or integrity). If availability of FTP is to be attacked, threats can be determined for each of the layers, such as DDOS Attack on Layer 4, MAC Spoofing on Layer 3, cutting cable on Layer 1.

Furthermore, in step S3 the database 14 is queried to determine potential threats to the data system for each of the relevant OSI layers of each of the identified assets. The threats are mapped to the assets using the OSI layers and the relevant cybersecurity properties. In addition, the database 14 classifies each identified threat with cybersecurity attributes, such as referring to integrity, availability and confidentiality. Examples of potential threats are shown in the table below:

| Asset, OSI layer | Threat |
|---|---|
| DATA | Modification of Data (integrity) |
| DATA / FTP | Read the data (Confidentiality) |
| DATA / FTP | DDOS (availability) |
| Communication / Data Link | ARP Spoofing (Integrity) |
| Communication / Data Link | MAC Address Spoofing (Confidentiality, Integrity) |
| Communication / Data Link | DDOS (Availability) |

In an example, FTP is used in the data system 2 and therefore forms an asset. FTP is a data transmission protocol and associated with the Application layer of the OSI model and is based on TCP/IP which is part of the Ethernet protocol which is associated with the transport layer, the network layer, the data link layer and the physical layer of the OSI model.

For each of those layers, threats are determined by querying the database based on the attack vector. If the availability is concerned, threats can be determined according to the associated layers of the OSI model. Regarding availability of FTP attacks a DDOS attack on transport layer, a MAC Spoofing on network layer 3, cutting cable attack on physical layer may be possible.

Further, in step S4 each identified threat is associated with a threat feasibility attribute which are categorized in aspects such as attack vector, complexity, privileges, user interaction, reproducibility, equipment, and likelihood as defined above

Each of the aspects of the threat feasibility attributes is categorized with a level or be valued with classes such as "low", "medium" and "high" or as values, such as values 1 to 5, 1 to 100 or the like.

Particularly, the threat feasibility attributes may be categorized as follows:

| | |
|---|---|
| Attack Vector | Network Local Network(5) , Adjacent (4), (3), Physical (2), Local Computer (1) |
| Complexity | Very Easy (1-100), Average Complexity(1-100), Very Complex(1-100)) |
| Privileges | Everyone (3) , Authentified (2), Root (1) |
| User Interaction | Simple Effort(1-100), Middle Effort(1-100), Time Consuming(1-100), Several Expert(1-100) needed) |
| Reproducibility | Easy to Reproduce (3), Hard To Reproduce (1), Must be Reevaluated (2) |
| Equipment needed for the attack | Standard Equipment (3), Expert Equipment (2), Professional Equipment (1) |
| Likelihood | Very Likely (3), Likely (2), Unlikely (1) |

Each of the categories is coded with a number. The categories may have a higher number the higher is the likelihood of a successful attack based on the threat feasibility attribute.

For instance, threats such as Man in the Middle and DDOS may be categorized as follows:

| Threat | Threat feasibility attribute |
|---|---|
| Man in The Middle to read out data, Confidentiality | Attack Vector: Local Network (3)<br>Complexity: Very Easy (50)<br>Privileges: Everyone (3)<br>User Interaction: Simple Effort ( 60 )<br>Reproducability: Easy to Reproduce (3)<br>Equipment: Standard (1)<br>Likelihood: Very Likely (3) |
| DDOS Attack, Availability | Attack Vector: Local Network (3)<br>Complexity: Very Easy (80)<br>Privileges: Everyone (3)<br>User Interaction: Simple Effort ( 90 )<br>Reproducability: Easy to Reproduce (3)<br>Equipment: Standard (3)<br>Likelihood: Very Likely (3) |

By querying the database 14 on each of the threats, one or more countermeasures are defined in step S5. The database 14 simply associates possible countermeasures for at least some of the potential threats and each respectively affected cybersecurity attribute. As a result, a list of countermeasures having an effect on the threats implied by the data system is obtained.

Furthermore, each obtained countermeasure is associated in step S6 with a countermeasure feasibility attribute having the same aspects as the threat feasibility attribute, namely attack vector, complexity, privileges, user interaction, reproducibility, equipment, and likelihood. The countermeasure feasibility attributes which correspond indicate the effect of a countermeasure on the threat feasibility attributes of one or more specific threats if/when the countermeasure against one or more of the identified threat had been applied. Particularly, relating to the level of countermeasure feasibility attribute the level of threat feasibility attribute is reduced to the level of the countermeasure feasibility attribute if it is smaller.

When countermeasures are applied the overall security of the data system may be affected, preferably improved. The overall security metric may be an average of all threat feasibility attributes after all identified countermeasures have been applied. To evaluate the impact of countermeasures on the overall security of the data system, the change of an overall security metric by applying the countermeasures is calculated. Therefore, the countermeasure feasibility attributes may be used to diminish the categorized levels or values of the aspects of threat feasibility attributes by applying a minimum function. Levels can be related to values so that by calculating a weighted sum of the values of aspects of all threat feasibility attributes of all threats, an overall security indication, i.e. an efficiency of the measures can be obtained.

The efficiency is calculated as the difference between the value of the aspects of the threat feasibility attribute before applying the countermeasures and after applying the countermeasures, e.g., in a weighted sum of the aspect values.

A threat and a countermeasure may have seven threat feasibility attributes and countermeasure feasibility attributes (such as attack vector, complexity, privileges, user interaction, reproducibility, equipment, and likelihood).

Furthermore, a target feasibility is given, which define the goal of the countermeasure determination process.

In a threat feasibility vector $V := [e1, e2, e3, e4, e5, e6, e7]^\mathsf{T}$ associated to each possible threat each element may be defined as attack vector e1, complexity e2, privileges e3, user interaction e4, reproducibility e5, equipment e6 and likelihood e7. The vector space of V may be expandable for an any number of threat feasibility attributes.

Furthermore, let $T \subseteq V$ the set of all identified potential threats T={t1, t2, ..., tn} of the analysed data system 2 and C $\subseteq$ V the set of all countermeasures C={c1, c2, ..., ck} associated to the identified potential threats.

First, to represent the actual state of our system and to include the effect of all used countermeasures {c1, c2, ..., ck} the function M is used

$$M : T \times \prod_{i=1}^{k} C \to V$$

$$(t,c) \mapsto M((t,c)) := \sum_{i=1}^{7} \min\{t_i, (c_1)_i, (c_2)_i, ..., (c_k)_i\} e_i$$

where k ∈ N is the number of used countermeasures C. Note, if a countermeasure has zero effect on a threat property, the coordinate can be set to ∞ or to the highest value on our scale of threat properties. Due to this setting or selection, the countermeasure has also zero effect in the calculation.

Moreover, to calculate the actual feasibility the function $\mathfrak{F}$ is applied. To respect the number of previous threats of an attack path the likelihood coordinate is reduced by λ for each considered previous threat T={$t_1$, $t_2$, ..., $t_k$}. λ is a weight factor which may be set to λ = 0.5 but other values may apply as well. The function $\mathfrak{F}$ is defined by:

$$\mathfrak{F} : V \to \mathbb{R}$$

$$x \mapsto \mathfrak{F}(x) := \frac{< a, x - n\lambda e_7 >}{\sum_{i=1}^{\dim V} < a_i, \mathbb{1} >} = \frac{\sum_{i=1}^{\dim V} a_i x_i - n\lambda a_7}{\sum_{i=1}^{\dim V} a_i}$$

where x is an overall security metric and n ∈ N is the number of previous considered threats,

$$\mathbb{1} := \sum_{i=1}^{\dim V} e_i \text{ and } a := \sum_{i=1}^{\dim V} a_i e_i \in V$$

where $a_i$ stands for a given weighting of the respective threat feasibility attribute.

If you consider *t* or *c* as vector from $\mathbb{R}^7$ it is the form

$$t = \begin{pmatrix} t_1 \\ t_2 \\ t_3 \\ t_4 \\ t_5 \\ t_6 \\ t_7 \end{pmatrix}, c = \begin{pmatrix} c_1 \\ c_2 \\ c_3 \\ c_4 \\ c_5 \\ c_6 \\ c_7 \end{pmatrix}$$

where every coordinate $t_i$ represents one threat feasibility attribute. If one or more coordinates are undefined, it may be set to the target feasibility which equals a predetermined acceptable feasibility.

$$M(t,c) = \begin{pmatrix} \min\{t_1, c_1\} \\ \min\{t_2, c_2\} \\ \min\{t_3, c_3\} \\ \min\{t_4, c_4\} \\ \min\{t_5, c_5\} \\ \min\{t_6, c_6\} \\ \min\{t_7, c_7\} \end{pmatrix}$$

$$\mathfrak{F}(M(t,c)) = \frac{< \begin{pmatrix} a_1 \\ a_2 \\ a_3 \\ a_4 \\ a_5 \\ a_6 \\ a_7 \end{pmatrix}, \begin{pmatrix} \min\{t_1,c_1\} \\ \min\{t_2,c_2\} \\ \min\{t_3,c_3\} \\ \min\{t_4,c_4\} \\ \min\{t_5,c_5\} \\ \min\{t_6,c_6\} \\ \min\{t_7,c_7\} \end{pmatrix} >}{a_1 + a_2 + a_3 + a_4 + a_5 + a_6 + a_7}$$

$$= \frac{a_1 \cdot \min\{t_1,c_1\} + a_2 \cdot \min\{t_2,c_2\} + a_3 \cdot \min\{t_3,c_3\} + ... + a_7 \cdot \min\{t_7,c_7\}}{a_1 + a_2 + a_3 + a_4 + a_5 + a_6 + a_7}$$

To include the effect of chosen countermeasures, the above defined function M is applied. Example: if counter-measures $c$ and $\tilde{c}$ are applied against a threat $t$

$$t = \begin{pmatrix} 1 \\ 5 \\ 2 \\ 5 \\ 3 \\ 3 \\ 4 \end{pmatrix}, c = \begin{pmatrix} 2 \\ 2 \\ 1 \\ 3 \\ x \\ 3 \\ 3 \end{pmatrix}, \tilde{c} = \begin{pmatrix} 3 \\ 3 \\ 3 \\ 1 \\ 3 \\ 2 \\ 1 \end{pmatrix}$$

$$M(t,c,\tilde{c}) = \begin{pmatrix} min\{1,2,3\} \\ min\{5,2,3\} \\ min\{2,1,3\} \\ min\{5,3,1\} \\ min\{3,x,3\} \\ min\{3,3,2\} \\ min\{4,3,1\} \end{pmatrix} = \begin{pmatrix} 1 \\ 2 \\ 1 \\ 1 \\ min\{x,3\} \\ 2 \\ 1 \end{pmatrix}$$

Where $x = c_5$ is undefined.

Furthermore, in this example it is assumed that an average target feasibility of 2 is wanted and where x is assumed as 2. So x = 2 and we use n = 2 in $\mathfrak{F}$ .

$$\mathfrak{F}(M(t,c,\tilde{c})) = \frac{< \begin{pmatrix} 1 \\ 1 \\ 1 \\ 1 \\ 1 \\ 1 \\ 1 \end{pmatrix}, \begin{pmatrix} 1 \\ 2 \\ 1 \\ 1 \\ 2 \\ 2 \\ 1-2\cdot0.5 \end{pmatrix} >}{1+1+1+1+1+1+1} = \frac{1+2+1+1+2+2+0}{7} = \frac{9}{7} = 1,22$$

When applying countermeasures some values of aspects of threat feasibility attributes are changed by corresponding countermeasure feasibility attributes, so that a difference between the overall security metric before and after applying one or more countermeasures can be calculated.

The task is to determine a set of optimized countermeasures from the list of identified countermeasures against the identified potential threats. This can be done in step S7 by an optimization process that calculates the result of applying one or more countermeasures in terms of overall security gain. The countermeasures can be ranked from most effective to least effective in terms of overall security gain. As optimization process conventional optimization algorithms can be used which are well known in the art.

When applying a countermeasure, it is necessary to introduce some manipulation to the data system, such as adding some hardware components or software components that must be considered with the list of identified assets of the data system. The added components each affect one or more OSI layers and potentially introduce additional threats as can be retrieved from the database.

As a result, the implementation of countermeasures will, on the first hand, reduce the security risk of the data system, but will add additional attack vectors as possible threats. Therefore, reducing the level/values of the aspects of the threat feasibility attributes may lead to the introduction of additional threat feasibility attributes of new threats.

In the optimization process, the countermeasures are brought into an order of highest to lowest efficiency. When evaluating the overall security gain, an introduction of additional potential threats by the considered countermeasures is also made.

The table below shows the manipulation of the threat feasibility attributes by applying a countermeasure and the resulting aspect values of the threat feasibility attributes when the countermeasure has been applied.

| Threat | Threat feasibility attribute after applying a countermeasure |
|---|---|
| Man in The Middle to read out data, Confidentiality | Attack Vector: Local Network<br>Complexity: Very Easy -> Very Complex (50)<br>Privileges: Everyone<br>User Interaction: Simple Effort -> Several Expert ( 60 )<br>Reproducability: Easy To Reproduce (3) -> Must Be Reevaluated (2)<br>Equipment: Standard<br>Likelihood: Likely -> Unlikely<br>The impact(damage) will be reduced |
| DDOS Attack, Availability | Attack Vector: Local Network<br>Complexity: Very Easy (80) -> Average Complexity<br>Privileges: Everyone<br>User Interaction: Simple Effort (90) -> Middle effort<br>Reproducibility: Easy to Reproduce<br>Equipment: Standard<br>Likelihood: Very Likely - > Likely<br>The impact will be reduced |

After the list of countermeasures from high to low efficiency has been generated, appropriate countermeasures may be selected by considering the resources needed to implement the countermeasure, such as budget, manpower, skills, time, processing capacity, storage capacity and the like. If the resources are limited, the efficiency of the countermeasure is considered combined with a cost function with the goal of maximizing the efficiency given the limited resources. The result may be the order of countermeasures to be implemented or given limited resources, the appropriate countermeasure to achieve the highest efficiency in terms of security gain.

**Claims**

1. A computer-implemented method for selecting countermeasures for potential threats to assets of a data system (2), comprising the steps of:

   - Providing (S1) a configuration of the data system including their assets including devices (21, 22, 23, 24, 25, 26, 27, 28, 29), software, data, data transmissions and their interconnections;
   - For each asset, retrieving (S2) from a database (14) a set of relevant OSI layers on which known security vectors may exist,

- For each retrieved OSI layer of each asset, retrieving (S3), from the database (14), potential threats each associated to one or more security attributes each defining a goal of cybersecurity, wherein the potential threats are associated to one or more threat feasibility attributes each indicating a level of an aspect of feasibility which make up for a security risk imposed by the respective potential threat;

- Using the database, associating (S4) to each of the potential threats at least one countermeasure of a set of countermeasures, each countermeasure has at least one countermeasure feasibility attribute each indicating a level of an aspect of feasibility reached when the countermeasure is applied on the potential threat, wherein the countermeasure is suitable for reducing the security risk of the respective potential threat in one or more aspects of threat feasibility attributes;

- Automatically performing (S5) an optimization to select one or more countermeasures among the set of countermeasures, so that the selected countermeasures are sufficient to reduce an overall security risk below a given level of security risk.

2. The method of claim 1, wherein the security attributes include at least one of confidentiality, integrity, authenticity and availability.

3. The method of claim 1 or 2, wherein the aspects of feasibility include at least one of attack vector, complexity, privileges, user interaction, reproducibility, equipment, and likelihood.

4. The method of any of the claims 1 to 3, wherein the overall security risk is evaluated by means of an overall security metric which is calculated based on the threat feasibility attributes of all potential threats and the countermeasure feasibility attribute of all considered countermeasures, wherein the optimization is performed based on a minimization of a cost function which depends on the overall security metric.

5. The method of claim 4, wherein the overall security metric is calculated by weighting the levels of feasibility.

6. The method of claim 4 or 5, wherein the cost function of the optimization depends on resources required to implement the respective considered one or more countermeasures, particularly one of time, material, budget, manpower, skill, processing capacity, and storage capacity.

7. The method of any of the claims 1 to 6, wherein the selected countermeasures are signaled or carried out.

8. The method of any of claims 1 to 7, wherein the selected countermeasures are determined successively by iteratively carrying out optimization steps each after assuming application of the previously selected countermeasures.

9. The method of claim 8, wherein the assuming of the application of the previously selected countermeasures includes adding one or more further assets caused by the assumed application of the countermeasure wherein at least one new threat and at least one new countermeasure is associated with the one or more further assets, where the next iteration of the optimization considers the at least one new threat and at least one new countermeasure.

10. The method of any of claims 1 to 9, wherein the countermeasures include one or more of: SecOC - Secure on board communication, installing or improving Firewall, installing or improving intrusion detection system, installing or improving hardware security module, establishing synchronous encryption or asynchronous encryption, applying checksums or rolling codes, providing shielding and/or sealing, using 2-factor authentication or authorization for hardware (binding of hardware), installing or improving air gap critical system, applying a zero trust network architecture, using secure bootloaders, installing or improving tamper-evident hardware, applying network segmentation, applying secure boot, and applying access control.

11. A device or a computer platform configured to perform the method of any of the claims 1 to 10.

12. A computer program set up to carry out the method according to one of claims 1 to 10.

13. A machine-readable storage medium storing the computer program of claim 12.

**11**

**12**

**13**

**1**

**14**

**Fig. 1**

**21**

| i/O | 22 |
| processing unit | 23 |
| storage | 24 |
| network iF | 25 |

**26**

**28**

**26**

**26**

**27**

WAN

**29**

| i/O | 22 |
| processing unit | 23 |
| storage | 24 |
| network iF | 25 |

**21**

| i/O | 22 |
| processing unit | 23 |
| storage | 24 |
| network iF | 25 |

**21**

**Fig. 2**

```
                    ┌──────────────┐
                    │    Start     │
                    └──────┬───────┘
                           │
                           ▼
          ┌─────────────────────────────┐
          │    Analyzing data system    │──── S1
          └──────────────┬──────────────┘
                         │
                         ▼
          ┌─────────────────────────────┐
          │   Relating assets to OSI    │──── S2
          │           layers            │
          └──────────────┬──────────────┘
                         │
                         ▼
          ┌─────────────────────────────┐
          │ Each OSI layer of an        │
          │ identified asset associated │──── S3
          │ to threats and its          │
          │ cybersecurity properties    │
          └──────────────┬──────────────┘
                         │
                         ▼
          ┌─────────────────────────────┐
          │   Associating threat to     │──── S4
          │  threat feasability property│
          └──────────────┬──────────────┘
                         │
                         ▼
          ┌─────────────────────────────┐
          │  Retrieving countermeasures │──── S5
          └──────────────┬──────────────┘
                         │
                         ▼
          ┌─────────────────────────────┐
          │ Associating countermeasures │──── S6
          │   to feasability attribute  │
          └──────────────┬──────────────┘
                         │
                         ▼
          ┌─────────────────────────────┐
          │    Optimizing order of      │──── S7
          │      countermeasures        │
          └─────────────────────────────┘
```

**Fig. 3**

Fig. 4

EP 4 641 418 A1

Europäisches
Patentamt

European
Patent Office

Office européen
des brevets

# EUROPEAN SEARCH REPORT

**Application Number**

EP 24 17 2825

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2007/016955 A1 (GOLDBERG YGOR [IL] ET AL) 18 January 2007 (2007-01-18) * paragraph [0002] - paragraph [0096] * ----- | 1-13 | INV.<br>G06F21/57<br>H04L9/40 |
| Y | Rathnayake Dilki: "An overview of the OSI model and its security threats ¦ Tripwire",<br>,<br>5 May 2023 (2023-05-05), pages 1-5, XP093170856,<br>Retrieved from the Internet:<br>URL:https://web.archive.org/web/2024040608 0139/https://www.tripwire.com/state-of-sec urity/overview-osi-model-and-its-security-threats<br>[retrieved on 2024-06-05]<br>* page 1 - page 4 * ----- | 1-13 | |
| A | JP 2022 089573 A (TOSHIBA CORP) 16 June 2022 (2022-06-16) * the whole document * ----- | 1-13 | **TECHNICAL FIELDS SEARCHED (IPC)**<br><br>G06F<br>H04L |

The present search report has been drawn up for all claims

| Place of search | Date of completion of the search | Examiner |
|---|---|---|
| Munich | 5 June 2024 | Kletti, Till |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.......................................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 17 2825

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2024

| Patent document cited in search report | Publication date | Patent family member(s) | | Publication date |
|---|---|---|---|---|
| US 2007016955 A1 | 18-01-2007 | CA | 2580978 A1 | 30-03-2006 |
| | | EP | 1802993 A2 | 04-07-2007 |
| | | US | 2007016955 A1 | 18-01-2007 |
| | | WO | 2006033112 A2 | 30-03-2006 |
| JP 2022089573 A | 16-06-2022 | JP | 7427577 B2 | 05-02-2024 |
| | | JP | 2022089573 A | 16-06-2022 |
| | | US | 2022179966 A1 | 09-06-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012109633 A2

- US 20140137257 A1